# EUROPÄISCHE PATENTANMELDUNG

(11) **EP 2 080 667 A1**
(43) Veröffentlichungstag der Anmeldung: **22.07.2009**
(21) Anmeldenummer: 08167233.9
(22) Anmeldetag: 22.10.2008
(51) Int. Cl.: B60Q 1/26, H05B 33/08, H05B 37/03

(54) **Verfahren zur Ausfallkontrolle von Lichtfunktionen in einem Kraftfahrzeugbordnetz**

(30) Priorität: 18.01.2008 DE 102008000086
(71) Anmelder: ASPÖCK Systems GmbH, 4722 Peuerbach (AT)
(72) Erfinder: Wimmer, Rudolf, 4722 Peuerbach (AT); Humberger, Daniel, 4723 Natternbach (AT); Steiner, Erwin, 4722 Peuerbach (AT); Grüneis, Günther, 4761 Enzenkirchen (AT)
(74) Vertreter: Gustorf, Gerhard

(57) **Zusammenfassung**

Das Verfahren dient zur Ausfallkontrolle von Lichtfunktionen (40), welche als Glühlampen und/oder LED-Leuchtkörper oder andere Leuchtkörper (42) ausgeführt sein können, in Kraftfahrzeugen mit einer Beleuchtungskontrolleinheit (LCU), bei dem die Stromaufnahme über die Zeit gemessen und ausgewertet wird. Die Messung wird in einem Zeitfenster (20) durchgeführt, dessen Beginn (Y0) unmittelbar nach einer Einschwingzeit liegt, in der der statische Zustand eines Leuchtkörpers (42) erreicht ist, und dessen Ende (Y1) einem mit der Beleuchtungskontrolleinheit (18) abgestimmten Zeitwert entspricht. Bei Unterschreiten eines Stromgrenzwertes (X) wird ein Defekt angezeigt, wobei X unterhalb eines Vielfachen der normalen Stromaufnahme einer Glühlampe und angenähert an die Stromaufnahme eines LED-Leuchtkörpers (42) liegt.

## Beschreibung

Die Erfindung betrifft ein Verfahren zur Ausfallkontrolle von Lichtfunktionen in einem Kraftfahrzeugbordnetz.

Nach gesetzlichen Vorschriften müssen in Kraftfahrzeugen und insbesondere in Zugfahrzeugen mit Anhängern die Blinkleuchten überwacht werden. Ein Ausfall einer Blinkleuchte muss dem Fahrer optisch oder akustisch angezeigt werden.

Charakteristisch für den Stromverlauf beim Einschalten einer Glühlampe ist ein anfänglich sehr hoher Strom (Einschaltimpuls), da der Glühfaden im kalten Zustand einen sehr geringen Widerstand hat. Danach verringert sich der Strom und stellt sich nach etwa 10ms auf einen im wesentlichen konstanten Wert ein, beispielsweise 1A bei einer Glühlampe von 21W Leistung. Die Leuchtstärke einer Glühlampe ist im ersten Moment nach dem Einschalten Null und erreicht nach etwa 100ms ihren vollen Wert. Zur Ausfallkontrolle von Glühlampen werden daher unterschiedliche Verfahren angewandt, beispielsweise das Messen der Impulsspitze oder des im wesentlichen konstanten Stroms nach dem Impuls oder die Ermittlung der gesamten Energie, die während der Einschaltzeit durch die Glühlampe fließt.

Sofern die Lichtanlage des Fahrzeugs aussschließlich LED-Leuchtkörper hat, eignet sich keine der Kontrollmethoden für die Überwachung von Glühlampen, da die Stromaufnahme in einer Leuchtdiode ohne Einschaltimpuls über die Zeit gleichbleibend und bei gleichen Lichtwerten wesentlich niedriger als bei einer Glühlampe ist. Zur LED-Kontrolle können daher wesentlich einfachere Verfahren eingesetzt werden, die diesem unterschiedlichen Betriebsverhalten Rechnung tragen.

Da LED-Leuchtkörper gegenüber herkömmlichen Glühlampen wesentlich bessere Betriebseigenschaften haben (Wegfall des Einschaltimpulses, geringere Stromaufnahme), werden in der Praxis immer häufiger Beleuchtungseinrichtungen eingesetzt, bei denen die Glühlampen durch LED-Leuchtkörper ersetzt werden. Daraus ergibt sich jedoch das Problem, dass nicht selten gemischte Anlagen entsprechend den gesetzlichen Vorschriften überwacht werden müssen, beispielsweise dann, wenn in einem Anhänger LED-Leuchtkörper und in einem anderen Anhänger Glühlampen eingesetzt sind. Zur Lösung dieses Problems wurde bereits vorgeschlagen, elektronische Vorschaltgeräte zu verwenden, die eine Glühlampe simulieren und nach dem Einschaltimpuls einen Einzelimpuls erzeugen, beispielsweise während eines Zeitfensters von 10 ms. Auf diese Weise ist eine Kontrolle von Glühlampen, beispielsweise in Fahrtrichtungsanzeigern möglich. Bei einem Ausfall einer Glühlampe oder eines LED-Leuchtkörpers wird der Einzelimpuls nicht erzeugt, so dass dem Fahrer der Defekt angezeigt wird.

Gegenstand der EP-A 1 653 782 der Anmelderin ist ein LED-Kontrollgerät für Fahrzeugleuchten, bei dem die elektrischen Eigenschaften von LED-Heckleuchten an diejenigen von mit Glühlampen bestückten Leuchten angepaßt werden sollen.

Aus DE 101 07 578 A1, die der Erfindung am nächsten kommt, ist eine Lichtanlage für Kraftfahrzeuge mit einer Überwachungsschaltung bekannt, bei der während der Stromüberwachung eine Last als Stromsenke parallel zugeschaltet wird, die eine einem reinen Glühlampenbetrieb zumindest ähnliche Stromaufnahme simuliert.

Gegenstand der DE 10 2006 018 308 A1 ist eine Schaltungsanordnung, mit der LED-Blinkleuchten über Kaltabfragen überprüft werden können, ohne daß hierfür ein bestimmtes Kontrollzeitfenster definiert ist.

Der Erfindung liegt die Aufgabe zugrunde, ein Verfahren zur Ausfallkontrolle zur Verfügung zu stellen, das bei geringem Energiebedarf nicht nur für den Einsatz in Hybridanlagen mit Glühlampen und LED-Leuchtkörpern geeignet ist, sondern auch Heckbeleuchtungen kontrollieren kann, bei denen entweder nur Glühlampen oder nur LED-Leuchtkörper eingesetzt sind.

Die Lösung dieser Aufgabe ergibt sich aus den Merkmalen des Patentanspruchs 1.Vorteilhafte Weiterbildungen sind Gegenstand der Unteransprüche.

Die Erfindung ist nachstehend anhand der Zeichnung erläutert. Es zeigen:
- Figur 1: schematisch ein Zugfahrzeug mit Aufleger oder Anhänger zur Darstellung des symbolischen Aufbaus einer Lichtanlage,
- Figur 2: schematisch den Aufbau eines Blinkgebers, der in eine in der Figur 1 gezeigte LCU integriert ist,
- Figur 3: das Schaltbild eines LED-Leuchtkörpers,
- Figur 4: die schematische Darstellung einer Heckbeleuchtung,
- Figur 5: einen vergrößerten Ausschnitt aus Figur 2 zur Darstellung der Funktionsüberwachung gemäß der Erfindung,
- Figur 6: einen Spannungsbereich als Rahmenbedingung für den definierten Stromverlauf,
- Figur 7: das Strombild einer einwandfreien Glühlampe ,
- Figur 8: das Strombild einer defekten Glühlampe,
- Figur 9: das Strombild eines fehlerfreien LED-Leuchtkörpers und
- Figur 10: das Strombild eines defekten LED-Leuchtkörpers.

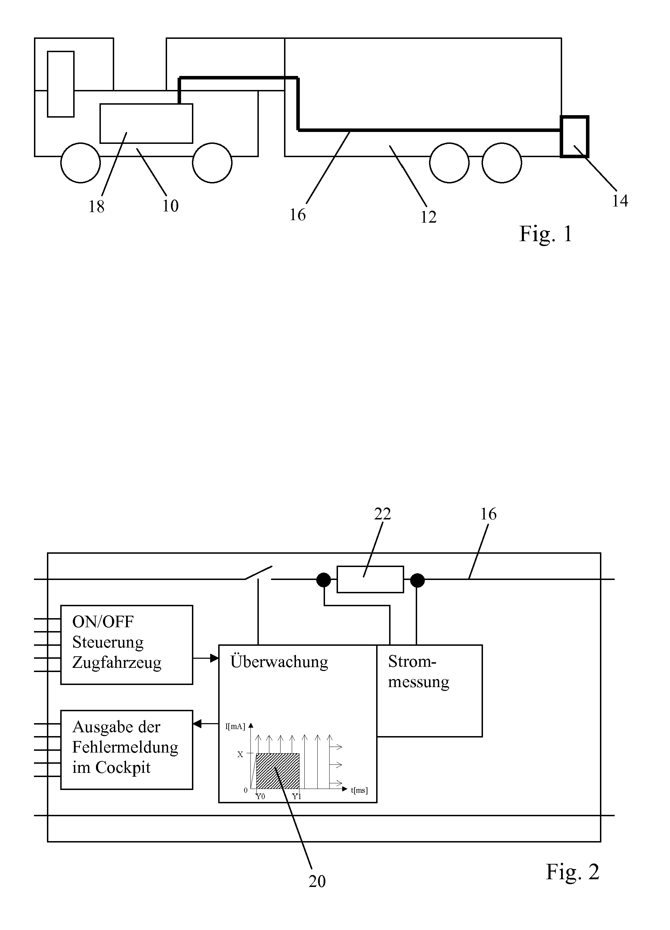

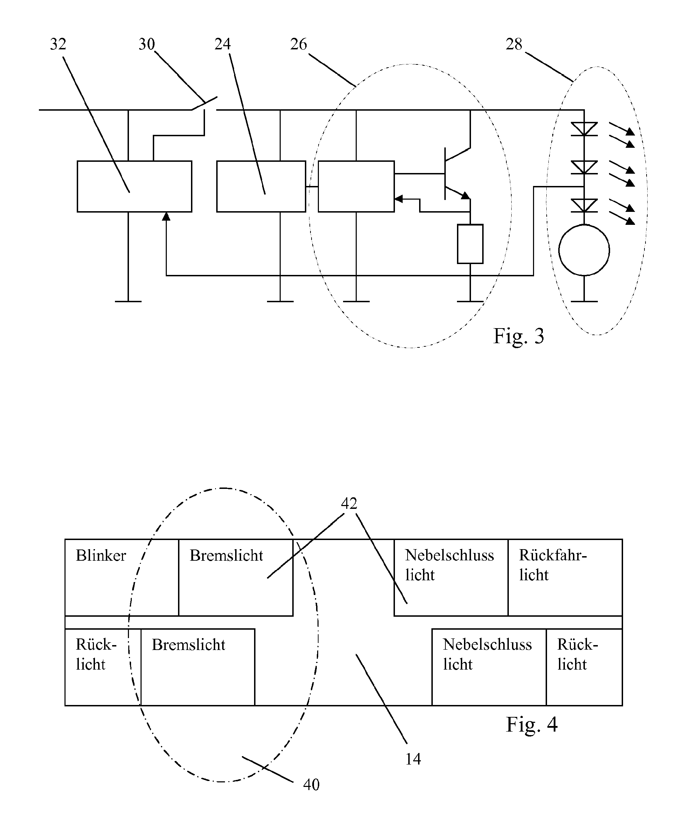

Figur 1 zeigt schematisch ein Zugfahrzeug 10 mit einem Aufleger 12 (oder Anhänger), dessen Heckbeleuchtung 14 kontrolliert werden soll. Die Heckbeleuchtung 14 kann, wie Figur 4 zeigt, aus mehreren Lichtfunktionen 40 bestehen, beispielsweise Rücklicht, Bremslicht, Blinker, Nebelschlusslicht, Rückfahrlicht, wobei eine Lichtfunktion 40 wiederum aus verschiedenen Leuchtkörpern 42 bestehen kann, beispielsweise Glühlampe, LED-Leuchtkörper oder andere Beleuchtungskörper. Die Heckbeleuchtung 14 ist bei älteren Auflegern 12 mit Glühlampen, bei Auflegern 12 neuerer Bauart mit LED-Leuchtkörpern bestückt. Möglich ist auch ein gemischter Aufbau aus Glühlampen und LED-Leuchtkörpern. Die Heckbeleuchtung 14 ist, wie Figur 1 weiter zeigt, über eine elektrische Leitung 16 mit einer im Führerstand des Zugfahrzeugs 10 angeordneten Beleuchtungskontrolleinheit 18 (LCU = Light Control Unit) verbunden.

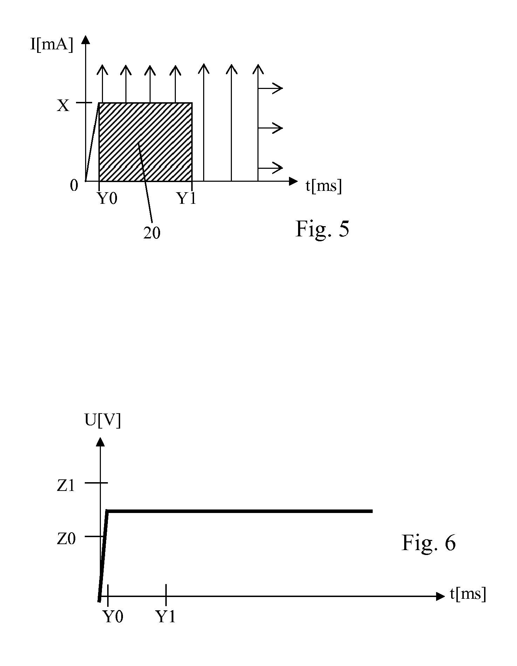

Um die Kommunikation zwischen Zugfahrzeug 10 und Heckbeleuchtung 14 am Aufleger oder Anhänger 12 zu ermöglichen, müssen am Zugfahrzeug 10 und an dem zu überwachenden Leuchtkörper 42 Anpassungen vorgenommen werden. Hierzu ist in der LCU 18 am Zugfahrzeug 10 gemäß der Erfindung ein Zeitfenster 20 (vgl. Figuren 2 und 5) vorgesehen, in dem die Messung stattfindet.

Die LCU 18 ermittelt - im dargestellten Ausführungsbeispiel über einen Shunt (Nebenschlußwiderstand 22) - den Stromfluß in der Stromleitung 16 in dem vorgegebenen Zeitfenster 20. Wie bereits erwähnt, werden grundsätzlich die Lichtfunktionen der Blinker rechts und links überwacht, da dies gesetzlich vorgeschrieben ist. Das Zeitfenster 20 kann mit den nachstehend definierten Bereichen auch für alle Lichtfunktionen 40 verwendet werden.

In diesem Zeitfenster 20 müssen bestimmte Stromwerte erfüllt sein, aufgrund derer die LCU 18 im Zugfahrzeug 10 entscheidet, ob die Lichtfunktion 40 in Ordnung oder defekt ist.

Wenn der Strom I in dem Zeitfenster 20, dessen Beginn nach einer charakteristischen Stromanstiegszeit Y0 (beispielsweise zwischen 5 und 10 ms) liegt, nach der das System eingeschwungen ist, höher als ein Grenzwert X von beispielsweise 250 oder 300 mA ist - höhere Grenzwerte bis etwa 500mA sind möglich -, dann wird die Lichtfunktion 40 (bestückt mit Glühlampen und/oder LED-Leuchtkörpern) als in Ordnung ausgewertet und keine Fehlermeldung im Cockpit des Zugfahrzeugs 10 ausgegeben. Dieses Zeitfenster 20 ist in Figur 5 als schraffiertes Rechteck wiedergegeben; der davor liegende Dreiecksbereich erfasst die oben erwähnte Einschwingzeit des Systems, in der nicht gemessen wird. Die Einschwingzeit berücksichtigt auch Phänomene wie Schalterprellen, Lade- und Entladekurven von Kondensatoren und dergleichen. Die aufgeschaltete Spannung U, dargestellt in Figur 6, mit welcher der Leuchtkörper 42 betrieben wird, muss in einem definierten Spannungsbereich zwischen Z0 und Z1 Volt liegen, damit der vorgegebene Stromverlauf eines funktionierenden Leuchtkörpers 42 ausgegeben werden kann und kein Defekt angezeigt wird. Bei Leuchtkörpern für Kfz-Lichtfunktionen liegt dieser Spannungsbereich vorzugsweise in der Größenordnung 10 bzw. 14 Volt oder 18 bzw. 30 Volt. Andere definierte Bereiche sind möglich.

Wenn jedoch die Stromstärke I in dem beschriebenen Zeitfenster 20 kleiner ist, d.h. zwischen 0 und X, dann wird angenommen, dass die Lichtfunktion 40 defekt ist, so dass eine Fehlermeldung ausgegeben wird. Sind mehrere Leuchtkörper 42 je Lichtfunktion 40 angeschlossen, beispielsweise eine Doppelbeleuchtung, dann wird die Fehlermeldung ausgegeben, wenn der letzte funktionierende Leuchtkörper 42 ausgefallen ist.

Das Ende des Zeitfensters 20 ist in Figur 5 mit Y1 angegeben, wobei beispielsweise Y1 = 80 ms, so dass sich in diesem Beispiel das gesamte Zeitfenster über 70 ms erstreckt. In diesem Zeitfenster 20 mit der Dauer Y1 - Y0 muss der verbrauchte Strom einer funktionierenden Lichtfunktion 40 über dem Grenzwert X liegen. Ein eventuell auftretender Kurzschluss wird durch dieses Protokoll nicht erfasst und muss von der LCU 18 verwaltet werden.

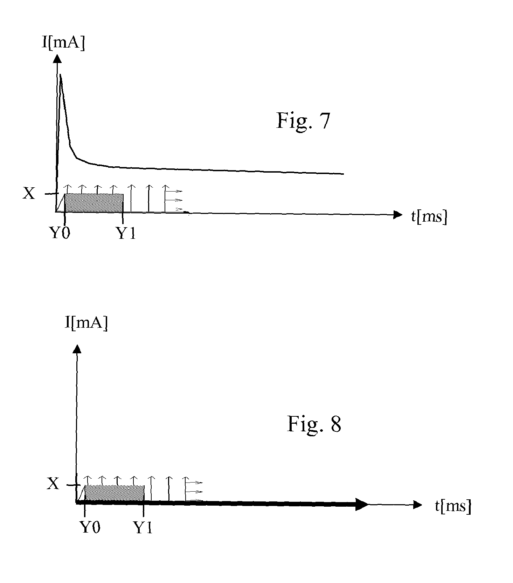

Figur 7 zeigt den typischen Stromverlauf für eine Glühlampe, die nach einem Einschaltimpuls eine sehr hohe Stromaufnahme hat, die ein Vielfaches von X ist. Nach dieser Einschwingphase stellt sich ein etwa konstanter Stromverlauf ein, der über dem Wert X liegt. Der Stromverlauf der fehlerfreien Glühlampe liegt zu jeder Zeit über diesem Grenzwert X des Zeitfensters 20, so dass im Cockpit des Zugfahrzeugs 10 keine Fehlermeldung angezeigt wird. Der nach Y1 folgende Bereich liegt außerhalb des überwachten Zeitfensters 20 und dient nicht zur Funktionsüberwachung.

Wenn jedoch, wie in Figur 8 angedeutet, die Glühlampe aufgrund eines Bruchs des Leuchtfadens defekt ist, wird eine offene Leitung signalisiert und im Cockpit eine Fehlermeldung generiert, da der Stromverlauf im Zeitfenster 20 unter dem Grenzwert X liegt. Figur 8 zeigt durch den Pfeil auf der Abszisse den Stromverlauf I = 0 einer "ideal defekten" Glühlampe.

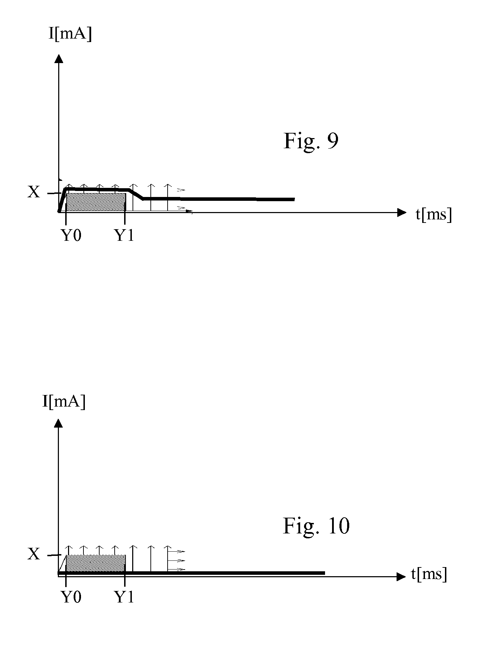

In der Figur 9 ist der Stromverlauf eines einwandfreien und in Figur 10 der eines defekten LED-Leuchtkörpers 42 dargestellt. Bei einem fehlerfreien LED-Leuchtkörper 42 muss im Zeitfenster 20 der Strom zu jedem Zeitpunkt größer sein als der Wert X, gekennzeichnet durch die schwarze dicke Linie in Figur 9, so dass kein Fehler im Zugfahrzeug angezeigt wird. Hierzu dient das in Figur 3 skizzierte Zeitglied 24 mit einem Stromregler 26, der in dem Zeitfenster 20 den Strom durch die LED-Einheit 28 (hier mit drei LEDs) erhöht, um den Strom über den Grenzwert X anzuheben.

Da LEDs - im Gegensatz zu Glühlampen - auch im defekten Zustand einen Strom ziehen, ist eine LED-Überwachungseinheit 32 vorgesehen, die einen Defekt in der LED-Einheit 28 erkennt und einen Schalter 30 öffnet, so dass analog einer Glühlampe ein Fadenbruch simuliert wird; der Strom sinkt damit unter den Wert X, so dass ein Fehler angezeigt wird. Der entsprechende Stromverlauf ist in Figur 10 dargestellt und entspricht dem eines defekten LED-Leuchtkörpers 42.

Wenn eine gemischte Kombination von Leuchtkörpern 40 eingesetzt ist, werden die Ströme aufaddiert; wenn der Gesamtstrom im Zeitfenster 20 über dem geforderten Grenzwert X liegt, erfolgt keine Fehleranzeige.

Ein Vorteil der Erfindung liegt darin, dass auch alte Anhänger und Aufleger 12 mit neuen Zugfahrzeugen 10 problemlos kombiniert werden können. Auch besteht die Möglichkeit, ältere Anhänger mit LEDs und zusätzlicher Glühlampensimulation zu betreiben.

Die LED-Beleuchtung mit dem Vorteil des geringen Stromverbrauchs und einer hohen Vibrationsfestigkeit kann bei alten Anhängern jederzeit nachgerüstet und zu allen Zugfahrzeugen kompatibel gemacht werden.

Der Strom mit dem Grenzwert X kann auch von älteren LCUs in älteren Zugfahrzeugen sicher gemessen und detektiert werden.

Mit einem neuen Zugfahrzeug ist es damit möglich, alle derzeit auf dem Markt befindlichen Anhänger problemlos zu ziehen und alle gesetzlichen Bestimmungen (Blinkerüberwachung etc.) zu erfüllen.

Ein wesentlicher Vorteil der Erfindung gegenüber dem Stand der Technik liegt darin, dass - wie in Figur 7 angedeutet - ein sehr kleines Zeitfenster 20 mit einem geringen oberen Stromgrenzwert X zur Funktionskontrolle ausreicht, so dass bei der Verwendung von LED-Leuchtkörpern 42 nur wenig Verlustleistung entsteht, die in Wärme umgewandelt wird.

Die Erfindung kann auch eingesetzt werden, um in einem sehr kurzen Zeitintervall Lichtfunktionen 40 auf ihre Funktion zu überprüfen, beispielsweise die Rücklichtfunktion, die Nebelschlusslichtfunktion, die Rückfahrlichtfunktion, die Bremslichtfunktion o. dgl., die im Fahrbetrieb unter Umständen sehr lange eingeschaltet sind. Hierzu wird diese Lichtfunktion 40 kurzzeitig, vorzugsweise nur wenige Millisekunden, durch die LCU abgeschaltet und danach wieder eingeschaltet, so dass anschließend die oben erläuterte Funktionskontrolle im Dauerbetrieb periodisch durchgeführt werden kann.

## Patentansprüche

1. Verfahren zur Ausfallkontrolle von Lichtfunktionen (40), welche als Glühlampen und/oder als LED- Leuchtkörper und/oder als andere Leuchtkörper (42) ausgeführt sein können, in Kraftfahrzeugen mit einer Beleuchtungskontrolleinheit (LCU), bei der die Stromaufnahme über die Zeit gemessen und angezeigt wird, wobei die Messung in einem Zeitfenster (20) durchgeführt wird, dessen Beginn (Y0) unmittelbar nach einer Einschwingzeit liegt, in der der statische Zustand eines Leuchtkörpers (42) erreicht ist, und dessen Ende (Y1) einem mit der Beleuchtungskontrolleinheit (18) abgestimmten Zeitwert entspricht, **dadurch gekennzeichnet, dass** bei Unterschreiten eines Stromgrenzwertes (X) ein Defekt angezeigt wird und X unterhalb eines Vielfachen der normalen Stromaufnahme einer Glühlampe und angenähert an die Stromaufnahme eines LED-Leuchtkörpers (42) liegt.

2. Verfahren nach Anspruch 1, **dadurch gekennzeichnet, dass** die Versorgungsspannung U des Zugfahrzeugs in einem definierten Spannungsbereich zwischen Z0 und Z1 liegt, um den für einen funktionierenden Leuchtkörper (42) erforderlichen Stromverlauf zu liefern.

3. Verfahren nach Anspruch 1 oder 2, **dadurch gekennzeichnet, dass** für das Zeitfenster (20) vorzugsweise der Beginn (Y0) zwischen 5 und 10 ms und das Ende (Y1) bei maximal etwa 80 ms liegt.

4. Verfahren nach einem der vorhergehenden Ansprüche, **dadurch gekennzeichnet, dass** die nicht zu unterschreitende Stromaufnahme (X) kleiner oder gleich 250 mA ist.

5. Verfahren nach einem der vorhergehenden Ansprüche, **dadurch gekennzeichnet, dass** die Ausfallkontrolle auch bei ständig eingeschalteten Lichtfunktionen (40) über die LCU (18) im Dauerbetrieb periodisch durchgeführt wird.
